(19) Europäisches Patentamt
European Patent Office
Office européen des brevets

(11) **EP 4 474 768 A1**

(12) **EUROPEAN PATENT APPLICATION**
published in accordance with Art. 153(4) EPC

(43) Date of publication:
**11.12.2024 Bulletin 2024/50**

(21) Application number: **22941457.8**

(22) Date of filing: **27.10.2022**

(51) International Patent Classification (IPC):
***G01C 21/20*** (2006.01)    ***G01S 19/48*** (2010.01)

(52) Cooperative Patent Classification (CPC):
**G01C 3/00; G01C 21/20; G01S 13/08;**
**G01S 13/931; G01S 19/48; H04W 4/02; H04W 4/40**

(86) International application number:
**PCT/CN2022/127812**

(87) International publication number:
**WO 2023/216520 (16.11.2023 Gazette 2023/46)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **09.05.2022  CN 202210499414**

(71) Applicant: **Xiamen Yaxon Zhilian Technology Co.,
Ltd.
Xiamen, Fujian 361000 (CN)**

(72) Inventors:
• **TU, Yankai**
  **Xiamen, Fujian 361000 (CN)**
• **CHEN, Qingxi**
  **Xiamen, Fujian 361000 (CN)**
• **YE, Xuhui**
  **Xiamen, Fujian 361000 (CN)**

(74) Representative: **Hofmann, Andreas**
  **RGTH**
  **Patentanwälte PartGmbB**
  **Postfach 33 02 11**
  **80062 München (DE)**

(54) **ASSISTED VEHICLE POSITIONING METHOD AND APPARATUS**

(57)    The present invention discloses a vehicle auxiliary positioning method and apparatus, periodically sending, by a vehicle A, position information of the vehicle A to the outside; when the vehicle A detects a vehicle D, and the vehicle D is not capable of sending position information of the vehicle D to the outside, requesting, by the vehicle A, an auxiliary unit B and an auxiliary unit C that are capable of detecting the vehicle D to assist in auxiliary and cooperative positioning within a communication range of the vehicle A, where the auxiliary unit B and the auxiliary unit C are vehicles or roadside units, first, determining whether the vehicle D is located on a straight line or an extended line on which the vehicle A and the auxiliary unit B or auxiliary unit C are located, if the vehicle D is located on the straight line or extended line on which the vehicle A and the auxiliary unit B or auxiliary unit C are located, determining coordinates of the vehicle D based on coordinates of the vehicle A, a distance between the vehicle A and the vehicle D, and a direction of a connection line between the vehicle A and the auxiliary unit B or the auxiliary unit C; if the vehicle D is not located on the straight line or extended line on which the vehicle A and the auxiliary unit B or auxiliary unit C are located, determining whether there are triangular relationships among the vehicle A, the vehicle D, and the auxiliary unit B and among the vehicle A, the vehicle D, and the auxiliary unit C separately, if there are the triangular relationships, calculating coordinates of the vehicle D according to a sine theorem or cosine theorem for a triangle. According to the present invention, a plurality of vehicles that can send position information of the vehicles are used to assist in auxiliary and cooperative positioning of a vehicle that cannot send position information of the vehicle, so that in a mixed traffic scenario, a current vehicle can accurately locate coordinates of another vehicle that cannot send position information of the another vehicle with low costs.

Detect, by a vehicle A, a vehicle D and that the vehicle D is not capable of sending position information of the vehicle D to the outside

Request, by the vehicle A, an auxiliary unit B and an auxiliary unit C that are capable of detecting the vehicle D to assist in auxiliary and cooperative positioning within a communication range of the vehicle A

Whether the vehicle D is located on a straight line on which the vehicle A and the auxiliary unit B or the auxiliary unit C are located

No

Yes

Determine coordinates of the vehicle D based on coordinates of the vehicle A, a distance between the vehicle A and the vehicle D, and a direction of a connection line between the vehicle A and the auxiliary unit B or the auxiliary unit C

Whether there are triangular relationships among the vehicle A, the vehicle D, and the auxiliary unit B and among the vehicle A, the vehicle D, and the auxiliary unit C separately

No

Yes

Calculate position coordinates of the vehicle D based on coordinates of the vehicle A, a distance between the vehicle A and the vehicle D, and a sine theorem or cosine theorem for a triangle

There is a measurement error, and auxiliary and cooperative positioning cannot be performed

## FIG. 1

## Description

## TECHNICAL FIELD

The present invention relates to the field of vehicle positioning, in particular to a vehicle auxiliary positioning method and apparatus.

## BACKGROUND TECHNOLOGY

The use of the 5G technology can enable vehicles to have a V2X communication capability between vehicles or between a vehicle and a road and the like. Combined with high-precision positioning of Beidou or GPS, a precise position of the vehicle may be sent to a surrounding vehicle, to implement traffic coordination and safety control. However, application of a 5G V2X technology is still developing. For a quite long period of time, a vehicle equipped with 5G and a vehicle not equipped with 5G travel together on the road. The vehicle not equipped with the 5G communication cannot send a real-time precise position of the vehicle. Therefore, if the vehicle equipped with 5G needs to know a real-time high-precision position of the vehicle not equipped with the 5G communication, the vehicle not equipped with the 5G communication can only be passively identified or detected through video, radar, or the like. However, most video or radar ranging can measure only a rough distance from a nearby vehicle, and a precise position of the nearby vehicle is not easily obtained.

There is no disclosed vehicle auxiliary positioning method and apparatus that can resolve the above defects in the prior art.

## DISCLOSURE OF THE INVENTION

To resolve the technical problem existing in the prior art, the present invention provides a vehicle auxiliary positioning method and apparatus, which uses a plurality of vehicles that can send position information of the vehicles to assist in auxiliary and cooperative positioning for a vehicle that cannot send position information of the vehicle, which requires low costs and are easy to promote in a large scale.

Technical solutions used to resolve the technical problem in the present invention are as follows:

A vehicle auxiliary positioning method, including: periodically sending, by a vehicle A, position information of the vehicle A to the outside; when the vehicle A detects a vehicle D, and the vehicle D cannot send position information of the vehicle D to the outside, requesting, by the vehicle A, an auxiliary unit B and an auxiliary unit C that can detect the vehicle D to assist in auxiliary and cooperative positioning within a communication range of the vehicle A, where the auxiliary unit B and the auxiliary unit C are vehicles or roadside units, first, determining whether the vehicle D is located on a straight line or an extended line on which the vehicle A and the auxiliary unit B or auxiliary unit C are located, if the vehicle D is located on the straight line or extended line on which the vehicle A and the auxiliary unit B or auxiliary unit C are located, determining coordinates of the vehicle D based on coordinates of the vehicle A, a distance between the vehicle A and the vehicle D, and a direction of a connection line between the vehicle A and the auxiliary unit B or the auxiliary unit C; if the vehicle D is not located on the straight line or extended line on which the vehicle A and the auxiliary unit B or auxiliary unit C are located, determining whether there are triangular relationships among the vehicle A, the vehicle D, and the auxiliary unit B and among the vehicle A, the vehicle D, and the auxiliary unit C separately, if there are the triangular relationships, calculating coordinates of the vehicle D according to a sine theorem or cosine theorem for a triangle.

As a preferred solution of the present invention, a distance AD between the vehicle A and the vehicle D, a distance AB between the vehicle A and the auxiliary unit B, a distance AC between the vehicle A and the auxiliary unit C, a distance BD between the auxiliary unit B and the vehicle D, and a distance CD between the auxiliary unit C and the vehicle D are acquired; and when AD+BD is equal to AB or AB+BD is equal to AD, the vehicle D is located on a straight line or extended line on which the vehicle A and the auxiliary unit B are located, and when AD+CD is equal to AC or AC+CD is equal to AD, the vehicle D is located on a straight line or extended line on which the vehicle A and the auxiliary unit C are located.

As a preferred solution of the present invention, the method further includes determining whether AD+BD is less than AB or AD+CD is less than AC, if it is determined that AD+BD is less than AB or AD+CD is less than AC, it means there is a measurement error, and auxiliary and cooperative positioning cannot be performed.

As a preferred solution of the present invention, the determining coordinates $(X_d, Y_d)$ of the vehicle D based on coordinates of the vehicle A, a distance between the vehicle A and the vehicle D, and a direction of a connection line between the vehicle A and the auxiliary unit B or the auxiliary unit C is specifically:

$$X_d = X_a + AD\cos(\theta)$$

$$Y_d = Y_a + AD\sin(\theta)$$

where $(X_a, Y_a)$ are the coordinates of the vehicle A, AD is the distance between the vehicle A and the vehicle D, $\theta$ is an included angle between the straight line on which the vehicle A and the auxiliary unit B or the auxiliary unit C are located relative to an x-axis of a rectangular coordinate system.

As a preferred solution of the present invention, that it is determined whether there are triangular relationships among the vehicle A, the vehicle D, and the auxiliary unit B and among the vehicle A, the vehicle D, and the auxiliary unit C separately is specifically, it is determined whether AD+BD is greater than AB and whether AD+CD is greater than AC. If AD+BD is greater than AB and AD+CD is greater than AC, there is a triangular relationship among the vehicle A, the vehicle D, and the auxiliary unit B and there is a triangular relationship among the vehicle A, the vehicle D, and the auxiliary unit C.

As a preferred solution of the present invention, the calculating the position coordinates of the vehicle D according to the sine theorem and cosine theorem of a triangle specifically includes: first, calculating inner angles $\angle BAC$, $\angle DAC$, and $\angle BAD$ of the triangle according to the cosine theorem or the sine theorem, and determining whether the vehicle D is located inside or outside a triangle BAC formed by the vehicle A, the auxiliary unit B, and the auxiliary unit C based on the calculated inner angles; then, calculating the coordinates of the vehicle D.

As a preferred solution of the present invention, when $\angle BAD + \angle DAC = \angle BAC$, it means that the vehicle D is located on an outer side of a connection line between the auxiliary unit B and the auxiliary unit C inside a triangle BAC or outside the triangle BAC, and the position of the vehicle D is a position at which the coordinates of the vehicle A are used as a start point and a connection line between the vehicle A and the auxiliary unit B rotates at an angle $\angle BAD$ in a direction closer to the auxiliary unit C at a distance of AD.

As a preferred solution of the present invention, when $\angle BAC + \angle DAC = \angle BAD$, it means that the vehicle D is located on an outer side of a connection line between the vehicle A and the auxiliary unit C outside the triangle BAC, and the position of the vehicle D is a position at which the coordinates of the vehicle A are used as a start point and a connection line between the vehicle A and the auxiliary unit B rotates at an angle $\angle BAD$ in a direction closer to the auxiliary unit C at a distance of AD.

As a preferred solution of the present invention, when $\angle BAC + \angle BAD = \angle DAC$, it means that the vehicle D is located on an outer side of a connection line between the vehicle A and the auxiliary unit B outside the triangle BAC, and the position of the vehicle D is a position at which a connection line between the vehicle A and the auxiliary unit B rotates at an angle $\angle BAD$ in a direction away from the auxiliary unit C at a distance of AD.

A vehicle auxiliary positioning apparatus, installed on a vehicle A and including:

a positioning module, configured to detect position information of the vehicle A;
a V2X communication module, configured to periodically send position information of the vehicle A to the outside;
a detection module, configured to detect a straight-line distance from an external vehicle; and
a determining and calculating module, which uses one of the above vehicle auxiliary positioning method to obtain position coordinates of a vehicle D.

It can be learned from the description of the present invention that, compared with the conventional technologies, the present invention has the following beneficial effects.

1. According to the present invention, a plurality of vehicles that can send position information of the vehicles are used to assist in auxiliary and cooperative positioning of a vehicle that cannot send position information of the vehicle, so that in a mixed traffic scenario, a current vehicle can accurately locate coordinates of another vehicle that cannot send position information of the another vehicle with low costs.

2. According to the present invention, data is transmitted between a vehicle and an auxiliary unit by using the V2X communication module, so that the amount of transmitted data is small, the influence on a load of the V2X communication is small, a calculation method is simple, the requirements for a controller are not high, and large-scale promotion and application are easy to implement.

## BRIEF DESCRIPTION OF THE DRAWINGS

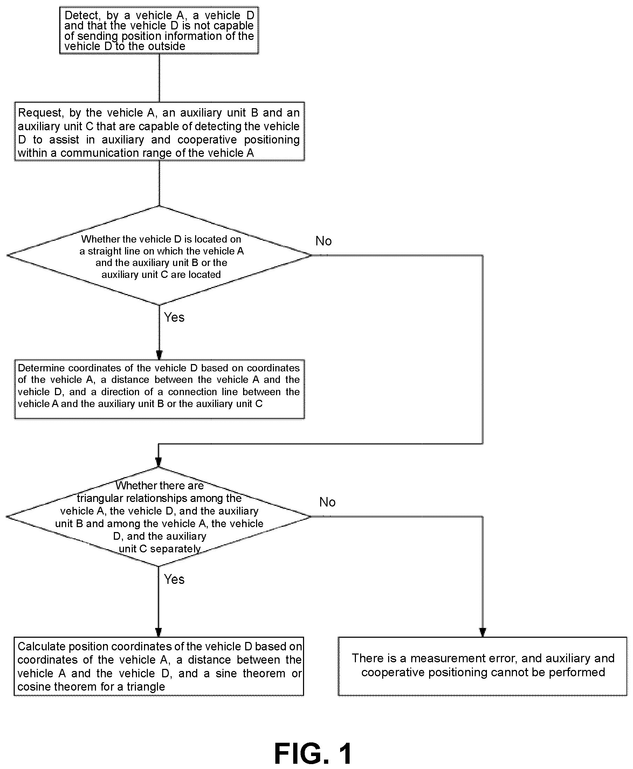

FIG. 1 is a flow chart of a method according to the present invention;
FIG. 2 is a schematic diagram of a vehicle D inside a triangle BAC according to the present invention;
FIG. 3 is a schematic diagram of a vehicle D on one side outside a triangle BAC according to the present invention;
FIG. 4 is a schematic diagram of a vehicle D on the other side outside a triangle BAC according to the present invention;

The present invention will be further illustrated with reference to the accompanying drawings and the specific embodiments.

## DESCRIPTION OF EMBODIMENTS

The present invention will be further illustrated with reference to the accompanying drawings and the embodiments.

In the descriptions of the present invention, it should be noted that an orientation or a position relationship indicated by a term "internal", "external", "upper", "lower", "one side", "the other side", "one end", "the other end", "edge", "relative", "four corners", "periphery", or an "o-shaped structure" is based on an orientation or a position relationship shown in the accompanying drawings, and is merely intended for ease of describing the present invention and simplifying description, but does not indicate or imply that the indicated structure has a specific orientation or be constructed and operated in a specific orientation. Therefore, such term shall not be understood as a limitation on the present invention.

In addition, in the description of the present invention, unless otherwise stated, "a plurality of" means two or more than two. The term "and/or" describes an association relationship between associated objects and indicates that three relationships may exist. For example, A and/or B may indicate the following three cases: only A exists, both A and B exist, and only B exists.

A vehicle auxiliary positioning method is provided. A vehicle A can periodically send position information of the vehicle A to the outside. When the vehicle A detects a vehicle D, and the vehicle D is not capable of sending position information of the vehicle D to the outside, the vehicle A requests an auxiliary unit B and an auxiliary unit C that are capable of detecting the vehicle D to assist in auxiliary and cooperative positioning within a communication range of the vehicle A. The auxiliary unit B may be a vehicle or a roadside unit, and the auxiliary unit C may be a vehicle or a roadside unit. Preferably, the auxiliary unit B and the auxiliary unit C are vehicles.

The vehicle A, the auxiliary unit B, and the auxiliary unit C are all equipped with a V2X communication module and a detection module. By using the V2X communication module, positions of the vehicle A, the auxiliary unit B, and the auxiliary unit C that are highly precisely positioned are sent to the outside, that is, the vehicle A, the auxiliary unit B, and the auxiliary unit C can know actual position coordinates of the others. The detection module may be a detection device such as a camera or a radar configured to detect a straight-line distance from an external vehicle. The vehicle D does not have a related communication device or positioning module installed and cannot send position information of the vehicle D to the outside.

In the present invention, the vehicle detects the presence of the vehicle D when driving, and a distance is AD, but does not know specific coordinates of the vehicle D, and therefore it is difficult to determine which lane the vehicle D is on. In this case, it is difficult to obtain precise position coordinates of the vehicle D only by using the vehicle A. Therefore, the vehicle A uses the V2X communication and requests another vehicle or roadside unit that is also provided with the V2X communication near a current position and can independently detect a distance from the vehicle D to assist in positioning.

In this example scenario, the auxiliary unit B and the auxiliary unit C are within a range of the V2X communication near the vehicle A, and can detect a distance BD between the vehicle D and the auxiliary unit B and a distance CD a distance between the vehicle D and the auxiliary unit C separately. In addition, for the vehicle A, auxiliary positioning can be implemented in a case that positions of the auxiliary unit B and the auxiliary unit C are farther than a position of the vehicle D, or definitely, positions of the auxiliary unit B and the auxiliary unit C are closer than a position of the vehicle D. Therefore, the auxiliary unit B and the auxiliary unit C can send the distances BD, CD and the precise coordinates of the auxiliary unit B and auxiliary unit C to the vehicle A in response to the cooperative positioning request of the vehicle A. In addition, due to the extremely high real time performance of the V2X communication, after the vehicle A receives the coordinates and related distances of the auxiliary unit B and auxiliary unit C, relative movement of the vehicles during information transmission, and the coordinates and related distances are used current coordinates and distances.

That the vehicle A of the present invention uses the auxiliary unit B and auxiliary unit C to assist in auxiliary and cooperative positioning includes the following steps.

First, it is determined whether the vehicle D is located on a straight line on which the vehicle A and the auxiliary unit B or auxiliary unit C are located. If the vehicle D is located on the straight line on which the vehicle A and the auxiliary unit B or auxiliary unit C are located, coordinates of the vehicle D are determined based on coordinates of the vehicle A, a distance between the vehicle A and the vehicle D, and a direction of a connection line between the vehicle A and the auxiliary unit B or the auxiliary unit C. If the vehicle D is not located on the straight line on which the vehicle A and the auxiliary unit B or auxiliary unit C are located, it is determined whether there are triangular relationships among the vehicle A, the vehicle D, and the auxiliary unit B and among the vehicle A, the vehicle D, and the auxiliary unit C separately. If there are the triangular relationships, the coordinates of vehicle D are calculated according to a sine theorem and cosine theorem for a triangle.

Specifically, the vehicle A may obtain a distance between the vehicle A and the vehicle D as AD, a distance between the vehicle A and the auxiliary unit B as AB, a distance between the vehicle A and the auxiliary unit C as AC, a distance between the auxiliary unit B and the vehicle D as BD, and a distance between the auxiliary unit C and the vehicle D as CD, and it is determined as follows:

it is determined whether AD+BD is equal to AB, or whether AD+CD is equal to AC. When AD+BD is equal to AB, the vehicle D is located on a straight line on which the vehicle A and the auxiliary unit B is located. When AD+CD is equal to AC, the vehicle D is located on a straight line on which the vehicle A and the auxiliary unit C are located. Based on the coordinates of the vehicle A, the distance AD between the vehicle A and the vehicle D, and the direction of the connection line between the vehicle A and the auxiliary unit B or the auxiliary unit C, coordinates $(X_d, Y_d)$ of the vehicle D are determined. A common rectangular coordinate system is used as an example, and then coordinates of the vehicle D are as follows:

$$X_d = X_a + AD\cos(\theta)$$

$$Y_d = Y_a + AD\sin(\theta)$$

$(X_a, Y_a)$ are the coordinates of the vehicle A, and $\theta$ is an included angle between a straight line on which the vehicle A and the auxiliary unit B or the auxiliary unit C are located relative to an x-axis of the rectangular coordinate system.

When AD+BD is not equal to AB and AD+CD is not equal to AC, it is determined whether there are the triangular relationships among the vehicle A, the vehicle D, and the auxiliary unit B and among the vehicle A, the vehicle D, and the auxiliary unit C separately. Specifically, it is determined whether AD+BD is greater than AB and whether AD+CD is greater than AC. If AD+BD is greater than AB and AD+CD is greater than AC, there is a triangular relationship among the vehicle A, the vehicle D, and the auxiliary unit B, so that a triangle ADB can be formed, and there is a triangular relationship among the vehicle A, the vehicle D, and the auxiliary unit C, so that a triangle ADC can be formed. In addition, there is also a triangular relationship among the vehicle A, the auxiliary unit B, and the auxiliary unit C, so that a triangle ABC can be formed.

If it is determined that AD+BD is less than AB or AD+CD is less than AC, it means there is a measurement error, and auxiliary and cooperative positioning cannot be performed.

In a case that the above trigonometric relationship is met, calculating the position coordinates of the vehicle D according to the sine theorem and cosine theorem for a triangle specifically includes the following: first, inner angles ∠BAC, ∠DAC, and ∠BAD of the triangle are calculated according to the cosine theorem or the sine theorem. Based on the calculated inner angles, it is determined whether the vehicle D is located inside or outside the triangle BAC formed by the vehicle A, the auxiliary unit B, and the auxiliary unit C; then, coordinates of the vehicle D are calculated.

The cosine theorem for the triangle is used as an example, the triangle ABC has cos∠BAC=(AC$^2$ +AB$^2$-BC$^2$) /(2*AC*AB), a triangle ADC has cos∠DAC=(AC$^2$+AD$^2$-DC$^2$) /(2*AC*AD), and a triangle ADB has cos∠BAD=(AB$^2$+AD$^2$-DB$^2$) /(2*AC*AD), so that the inners angles ∠BAC, ∠DAC and ∠BAD are obtained through calculation for further determining.

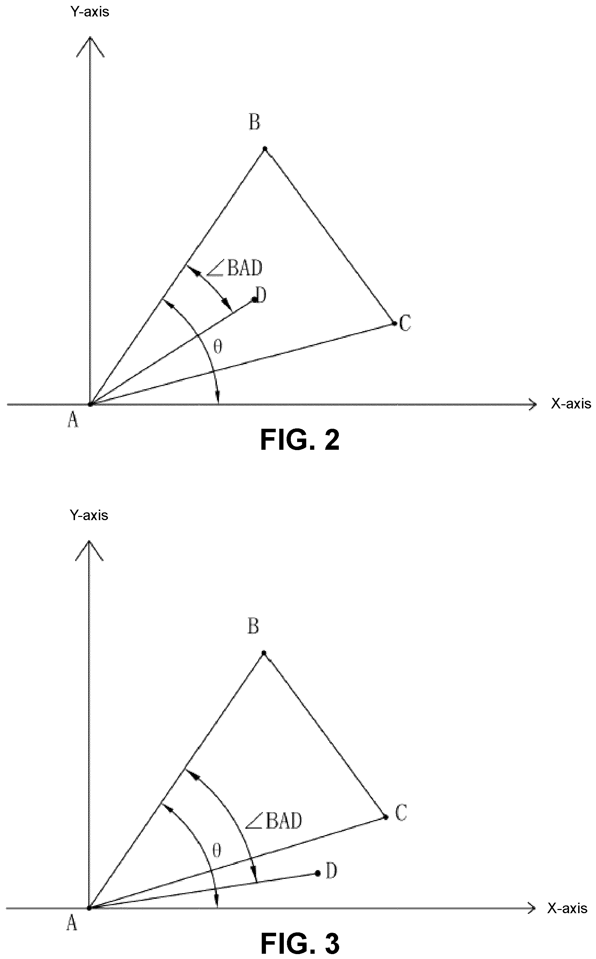

When ∠BAD+∠DAC = ∠BAC, it means that the vehicle D is located inside the triangle BAC. Refer to FIG. 2. The position of the vehicle D is a position at which the coordinates of the vehicle A are used as a start point and a connection line between the vehicle A and the auxiliary unit B rotates at an angle ∠BAD in a direction closer to the auxiliary unit C at a distance of AD.

Specifically, a common rectangular coordinate system is used as an example, and it is assumed that the coordinates of the vehicle A are $(X_a, Y_a)$ , then the co-ordinates $(X_d, Y_d)$ of the vehicle D are:

$$X_d = X_a + AD\cos(\theta - \angle BAD)$$

$$Y_d = Y_a + AD\sin(\theta - \angle BAD)$$

$\theta$ is an included angle between the connection line between the vehicle A and the auxiliary unit B relative to the x-axis of the rectangular coordinate system.

When ∠BAC+∠DAC = ∠BAD, it means that the vehicle D is located on an outer side of a connection line between the vehicle A and the auxiliary unit C outside the triangle BAC. Refer to FIG. 3. The position of the vehicle D is a position at which the coordinates of the vehicle A are used as a start point and a connection line between the vehicle A and the auxiliary unit B rotates at an angle ∠BAD in a direction closer to the auxiliary unit C at a distance of AD.

Specifically, a common rectangular coordinate system is used as an example, and it is assumed that the coordinates of the vehicle A are $(X_a, Y_a)$ , then the co-ordinates $(X_d, Y_d)$ of the vehicle D are:

$$X_d = X_a + AD\cos(\theta - \angle BAD)$$

$$Y_d = Y_a + AD\sin(\theta - \angle BAD)$$

$\theta$ is an included angle between the connection line between the vehicle A and the auxiliary unit B relative to the x-axis of the rectangular coordinate system.

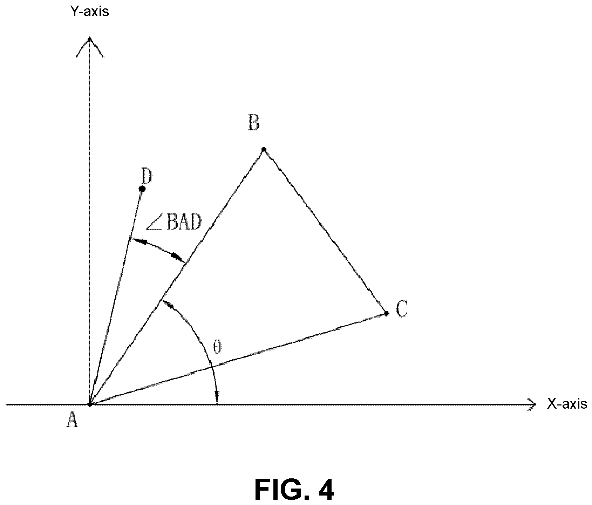

When ∠BAC+∠BAD = ∠DAC, it means that the vehicle D is located on an outer side of a connection line between the vehicle A and the auxiliary unit B outside the triangle BAC. Refer to FIG. 4. The position of the vehicle D is a position at which a connection line between the vehicle A and the auxiliary unit B rotates at an angle ∠BAD in a direction away from the auxiliary unit C at a distance of AD.

Specifically, a common rectangular coordinate system is used as an example, and it is assumed that the coordinates of the vehicle A are $(X_a, Y_a)$, then the coordinates $(X_d, Y_d)$ of the vehicle D are:

$$X_d = X_a + AD\cos(\theta + \angle BAD)$$

$$Y_d = Y_a + AD\sin(\theta + \angle BAD)$$

$\theta$ is an included angle between the connection line between the vehicle A and the auxiliary unit B relative to the x-axis of the rectangular coordinate system.

The present invention further proposes a vehicle auxiliary positioning apparatus, which is installed on a vehicle A and includes:

a positioning module, configured to detect position information of the vehicle A, which may be a Beidou positioning module or a GPS positioning module;

a V2X communication module, configured to periodically send position information of the vehicle A to the outside, which may be a 5G V2X communication module and has extremely high real-time performance;

a detection module, configured to detect a straight-line distance from an external vehicle, where the detection module may be a camera module or a radar module; and

a determining and calculating module, which uses one of the above vehicle auxiliary positioning method to obtain position coordinates of a vehicle D.

The above are only specific implementations of the present invention, but the design concept of the present invention is not limited thereto. Any non-substantive changes to the present invention using this concept shall constitute an infringement on the protection scope of the present invention.

Industrial applicability

For the vehicle auxiliary positioning method and apparatus of the present invention, the vehicle A, the auxiliary unit B, and the auxiliary unit C are all equipped with the V2X communication module and the detection module. Positions for high-precision positioning thereof are sent to the outside by using the V2X communication module, that is, the vehicle A, the auxiliary unit B, and the auxiliary unit C can know actual position coordinates of the others. The detection module may be a detection device such as a camera or a radar to detect a straight-line distance from an external vehicle. Positioning data and a test distance are analyzed, determined, and calculated, so that a vehicle not equipped with 5G communication may be accurately positioned. According to the present invention, data is transmitted between a vehicle and an auxiliary unit by using the V2X communication module, so that the amount of transmitted data is small, the influence on a load of the V2X communication is small, a calculation method is simple, the requirements for a controller are not high, and large-scale promotion and application are easy to implement. By using the 5G communication and vehicle-mounted apparatus, the present invention is easy to implement in industry, and modules such as the positioning module, the V2X communication module, the detection module, and the determining and calculating module are also easy to manufacture in industry.

**Claims**

1. A vehicle auxiliary positioning method, **characterized by** comprising: periodically sending, by a vehicle A, position information of the vehicle A to the outside; when the vehicle A detects a vehicle D, and the vehicle D is not capable of sending position information of the vehicle D to the outside, requesting, by the vehicle A, an auxiliary unit B and an auxiliary unit C that are capable of detecting the vehicle D to assist in auxiliary and cooperative positioning within a communication range of the vehicle A, where the auxiliary unit B and the auxiliary unit C are vehicles or roadside units, first, determining whether the vehicle D is located on a straight line or an extended line on which the vehicle A and the auxiliary unit B or auxiliary unit C are located, if the vehicle D is located on the straight line or extended line on which the vehicle A and the auxiliary unit B or auxiliary unit C are located, determining coordinates of the vehicle D based on coordinates of the vehicle A, a distance between the vehicle A and the vehicle D, and a direction of a connection line between the vehicle A and the auxiliary unit B or the auxiliary unit C; if the vehicle D is not located on the straight line or extended line on which the vehicle A and the auxiliary unit B or auxiliary unit C are located, determining whether there are triangular relationships among the vehicle A, the vehicle D, and the auxiliary unit B and among the vehicle A, the vehicle D, and the auxiliary unit C separately, if there are the triangular relationships, calculating coordinates of the vehicle D according to a sine theorem or cosine theorem for a triangle.

2. The vehicle auxiliary positioning method according to claim 1, **characterized by** comprising: acquiring a distance AD between the vehicle A and the vehicle D, a distance AB between the vehicle A and the auxiliary unit B, a distance AC between the vehicle A and the auxiliary unit C, a distance BD between the auxiliary unit B and the vehicle D, and a distance CD between the auxiliary unit C and the vehicle D, wherein when AD+BD is equal to AB or AB+BD is equal to AD, the vehicle D is located on a straight line or extended line on which the vehicle A and the auxiliary unit B are located, and when AD+CD is equal to AC or AC+CD is equal to AD, the vehicle D is located on a straight line or extended line on which the vehicle A and the auxiliary unit C are located.

3. The vehicle auxiliary positioning method according to claim 2, **characterized by** further comprising: determining whether AD+BD is less than AB or AD+CD is less than AC, wherein if it is determined that AD+BD is less than AB or AD+CD is less than AC, it means there is a measurement error, and auxiliary and cooperative positioning cannot be performed.

4. The vehicle auxiliary positioning method according to claim 1, **characterized in that** the determining coordinates $(X_d, Y_d)$ of the vehicle D based on coordinates of the vehicle A, a distance between the vehicle A and the vehicle D, and a direction of a connection line between the vehicle A and the auxiliary unit B or the auxiliary unit C is specifically:

$$X_d = X_a + AD\cos(\theta)$$

$$Y_d = Y_a + AD\sin(\theta)$$

$(X_a, Y_a)$ are the coordinates of the vehicle A, AD is the distance between the vehicle A and the vehicle D, $\theta$ is an included angle between the straight line on which the vehicle A and the auxiliary unit B or the auxiliary unit C is located relative to an x-axis of a rectangular coordinate system.

5. The vehicle auxiliary positioning method according to claim 2, **characterized in that** the determining whether there are triangular relationships among the vehicle A, the vehicle D, and the auxiliary unit B and among the vehicle A, the vehicle D, and the auxiliary unit C separately is specifically, determining whether AD+BD is greater than AB and whether AD+CD is greater than AC, if AD+BD is greater than AB and AD+CD is greater than AC, there is a triangular relationship among the vehicle A, the vehicle D, and the auxiliary unit B and there is a triangular relationship among the vehicle A, the vehicle D, and the auxiliary unit C.

6. The vehicle auxiliary positioning method according to claim 5, **characterized in that** the calculating position coordinates of the vehicle D according to a sine theorem and cosine theorem for a triangle specifically comprises: first, calculating inner angles ∠BAC, ∠DAC, and ∠BAD of the triangle according to the cosine theorem or the sine theorem, and determining whether the vehicle D is located inside or outside a triangle BAC formed by the vehicle A, the auxiliary unit B, and the auxiliary unit C based on the calculated inner angles; then, calculating the coordinates of the vehicle D.

7. The vehicle auxiliary positioning method according to claim 6, **characterized in that** when ∠BAD+∠DAC = ∠BAC, it means that the vehicle D is located on an outer side of a connection line between the auxiliary unit B and the auxiliary unit C inside the triangle BAC or outside the triangle BAC, and the position of the vehicle D is a position at which the coordinates of the vehicle A are used as a start point and a connection line between the vehicle A and the auxiliary unit B rotates at an angle ∠BAD in a direction closer to the auxiliary unit C at a distance of AD.

8. The vehicle auxiliary positioning method according to claim 6, **characterized in that** when ∠BAC+∠DAC = ∠BAD, it means that the vehicle D is located on an outer side of a connection line between the vehicle A and the auxiliary unit C outside the triangle BAC, and the position of the vehicle D is a position at which the coordinates of the vehicle A are used as a start point and a connection line between the vehicle A and the auxiliary unit B rotates at an angle ∠BAD in a direction closer to the auxiliary unit C at a distance of AD.

9. The vehicle auxiliary positioning method according to claim 6, **characterized in that** when ∠BAC+∠BAD = ∠DAC, it means that the vehicle D is located on an outer side of a connection line between the vehicle A and the auxiliary unit B outside the triangle BAC, and the position of the vehicle D is a position at which a connection line between the vehicle A and the auxiliary unit B rotates at an angle ∠BAD in a direction away from the auxiliary unit C at a distance of AD.

10. A vehicle auxiliary positioning apparatus, installed on a vehicle A, **characterized by** comprising:

    a positioning module, configured to detect position information of the vehicle A;
    a V2X communication module, configured to periodically send position information of the vehicle A to the outside;
    a detection module, configured to detect a straight-line distance from an external vehicle; and
    a determining and calculating module, which uses the vehicle auxiliary positioning method according to any one of claims 1 to 9, to obtain position coordinates of a vehicle D.

Detect, by a vehicle A, a vehicle D
and that the vehicle D is not capable
of sending position information of the
vehicle D to the outside

Request, by the vehicle A, an auxiliary unit B and an
auxiliary unit C that are capable of detecting the vehicle
D to assist in auxiliary and cooperative positioning
within a communication range of the vehicle A

Whether the vehicle D is located on
a straight line on which the vehicle A
and the auxiliary unit B or the
auxiliary unit C are located

No

Yes

Determine coordinates of the vehicle D based on coordinates
of the vehicle A, a distance between the vehicle A and the
vehicle D, and a direction of a connection line between the
vehicle A and the auxiliary unit B or the auxiliary unit C

Whether there are
triangular relationships among the
vehicle A, the vehicle D, and the auxiliary
unit B and among the vehicle A, the vehicle
D, and the auxiliary
unit C separately

No

Yes

Calculate position coordinates of the vehicle D based on
coordinates of the vehicle A, a distance between the
vehicle A and the vehicle D, and a sine theorem or
cosine theorem for a triangle

There is a measurement error, and auxiliary and
cooperative positioning cannot be performed

# FIG. 1

FIG. 2

FIG. 3

**FIG. 4**

# INTERNATIONAL SEARCH REPORT

| | International application No. |
|---|---|
| | **PCT/CN2022/127812** |

## A. CLASSIFICATION OF SUBJECT MATTER

G01C 21/20(2006.01)i; G01S 19/48(2010.01)i

According to International Patent Classification (IPC) or to both national classification and IPC

## B. FIELDS SEARCHED

Minimum documentation searched (classification system followed by classification symbols)

G01C; G01S

Documentation searched other than minimum documentation to the extent that such documents are included in the fields searched

Electronic data base consulted during the international search (name of data base and, where practicable, search terms used)

CNKI, CNPAT, WPI, EPODOC: 厦门雅迅网络股份有限公司, 涂岩恺, 陈青溪, 叶旭辉, 车辆, 定位, 位置, 辅助, 坐标, 通信, 协同, 距离, 直线, 延长线, 三角, 车联网, 其他车, 未知车, 失效车, 目标车, 环境车, 背景车, 邻车, 本车, 主车, 参照物, 标志, vehicle , position+, coordinate, V2X, vehicle to everything, Vehicle to X, 5G, distance, line, triangle, cooperat+, host vehicle, assist+

## C. DOCUMENTS CONSIDERED TO BE RELEVANT

| Category* | Citation of document, with indication, where appropriate, of the relevant passages | Relevant to claim No. |
|---|---|---|
| Y | CN 108345020 A (CHANGSHA INTELLIGENT DRIVING INSTITUTE LTD.) 31 July 2018 (2018-07-31)<br>    description, paragraphs [0066]-[0098], and figure 3 | 1-10 |
| Y | CN 112859861 A (SHENZHEN IDEA-A TECHNOLOGY CO., LTD.) 28 May 2021 (2021-05-28)<br>    description, paragraphs [0006]-[0029], and figures 1-3 | 1-10 |
| A | CN 110333524 A (BEIJING BAIDU NETCOM SCIENCE AND TECHNOLOGY CO., LTD.) 15 October 2019 (2019-10-15)<br>    entire document | 1-10 |
| A | CN 112346103 A (TSINGHUA UNIVERSITY) 09 February 2021 (2021-02-09)<br>    entire document | 1-10 |
| A | CN 113674551 A (DONGFENG MOTOR GROUP CO., LTD.) 19 November 2021 (2021-11-19)<br>    entire document | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 January 2023** | **18 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/127812**

**C.     DOCUMENTS CONSIDERED TO BE RELEVANT**

| Category* | Citation of document, with indication, where appropriate, of the relevant passages | Relevant to claim No. |
|---|---|---|
| A | US 2011018737 A1 (AUTOMOTIVE RESEARCH & TESTING CENTER) 27 January 2011 (2011-01-27)<br>      entire document | 1-10 |

Form PCT/ISA/210 (second sheet) (January 2015)

INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| CN | 108345020 | A | 31 July 2018 | CN | 108345020 | B | 18 August 2020 |
| CN | 112859861 | A | 28 May 2021 | None | | | |
| CN | 110333524 | A | 15 October 2019 | US | 2019302275 | A1 | 03 October 2019 |
| | | | | CN | 108535753 | A | 14 September 2018 |
| CN | 112346103 | A | 09 February 2021 | None | | | |
| CN | 113674551 | A | 19 November 2021 | None | | | |
| US | 2011018737 | A1 | 27 January 2011 | None | | | |

International application No.

**PCT/CN2022/127812**

Form PCT/ISA/210 (patent family annex) (January 2015)